# EUROPEAN PATENT SPECIFICATION

(11) **EP 3 381 640 B1**
(45) Date of publication and mention of the grant of the patent: **18.12.2019**
(21) Application number: 18164469.1
(22) Date of filing: 28.03.2018
(51) Int. Cl.: B29C 45/17

(54) **INJECTION MOLDING MACHINE**
SPRITZGIESSMASCHINE
MACHINE DE MOULAGE À INJECTION

(30) Priority: 31.03.2017 JP 2017072292
(43) Date of publication of application: 03.10.2018
(73) Proprietor: Sumitomo Heavy Industries, Ltd., Tokyo 141-6025 (JP)
(72) Inventor: MORITA, Hiroshi, Chiba-shi,, Chiba 263-0001 (JP); HOTTA, Daigo, Chiba-shi,, Chiba 263-0001 (JP)
(74) Representative: Louis Pöhlau Lohrentz

(56) References cited:
- DE-C1- 19 510 488
- JP-B2- 5 351 494
- KR-A- 20040 084 615
- US-B1- 6 334 765
- Anonymous: "STRAIN AND FORCE SENSORS WITH TECHNOLOGY - SENSORMATE - THE SOLUTION FOR INJECTION MOLDING MACHINES", , 5 November 2015 (2015-11-05), pages 1-12, XP055491826, Retrieved from the Internet: URL:https://www.gefran.com/es/download/430 9/attachment/en [retrieved on 2018-07-11]

## Description

### BACKGROUND OF THE INVENTION

### Field of the Invention

Certain embodiment of the present invention relates to an injection molding machine.

### Description of Related Art

Japanese Patent Document JP 5 351494 B2 discloses a mold clamping device which detects, in the process of a mold clamping operation, stress generated in a prescribed part of the device, and, when the detected stress exceeds a prescribed standard stress, stops the mold clamping operation.

United States Patent US 6 334 765 B1 discloses an injection molding machine wherein, for determining the closing force, a distance measuring device senses the bending-open of at least one limb of a C-form frame.

German patent DE 195 10 488 C1 discloses an injection molding machine with a compensator for machine frame distortion under loading.

Korean patent document KR 2004 0084615 discloses a device for preventing self-resonance of an injection molding machine, said device having electrorheological fluid and detecting units attached to the frame and detecting the vibration of the frame.

In an injection molding machine disclosed JP 2010 247410 A, an acceleration sensor is provided on a stationary platen to which a stationary mold is attached, and an acceleration of a vibration of the stationary platen detected by the acceleration sensor is input to a controller which controls a toggle mechanism. In addition, when a crosshead is driven and a movable mold is clamped to the stationary mold, the vibration of the stationary mold is monitored from a mold opening position at which the movable mold is opened by a predetermined mold opening amount to a mold closing position at which the movable mold comes into contact with the stationary mold, and if the vibration exceeding a predetermined threshold value is detected, the crosshead is stopped and a molding closing operation is stopped. Accordingly, in a case where a foreign matter is caught in a mold, the foreign matter is reliably detected, and the mold closing operation can be stopped. The reason why the acceleration sensor is provided in the stationary platen is because the stationary platen is not a movable member and thus, the stationary platen is not affected by the acceleration caused by the movement of the member.

The injection molding machine includes a frame which supports a movable member such as a movable platen to which the movable mold is attached. When the movable member is moved with respect to the frame, the frame receives a reaction force from the movable member and is strained. The movable member is repeatedly moved, and thus, strain is repeatedly generated, and the frame is damaged.

### SUMMARY OF THE INVENTION

The present invention is made in consideration of the above-described problems, and a main object thereof is to provide an injection molding machine capable of suppressing damages of a frame which supports a movable member.

In order to achieve the above-described object of the present invention, according to an aspect of the present invention, there is provided an injection molding machine, including: a frame; a movable member which is supported by the frame; a movement control unit which controls a movement of the movable member with respect to the frame; and a frame strain evaluation unit which performs at least one of a measurement and an estimation of strain of the frame caused by the movement of the movable member.

According to an aspect of the present invention, the injection molding machine capable of suppressing damages of the frame supporting the movable member is provided.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a view showing a mold clamping unit and a frame according to the embodiment.
Fig. 4 is a functional block diagram showing components of a controller according to the embodiment.
Fig. 5 is a diagram showing the controller which restricts a magnitude of torque by a movement correction unit according to the embodiment.
Fig. 6 is a diagram showing the controller which corrects a speed pattern by the movement correction unit according to the embodiment.
Figs. 7A to 7D are graphs showing a speed pattern of a crosshead before a correction, strain of the frame before the correction, a speed pattern of the crosshead after the correction, and strain of the frame after the correction in a mold closing process and a mold clamping process according to the embodiment.

### DETAILED DESCRIPTION OF THE INVENTION

Hereinafter, an embodiment of the present invention is described with reference to the drawings. However, in each drawing, the same or corresponding reference numerals are assigned to the same or corresponding configurations, and descriptions thereof are omitted.

### Injection Molding Machine

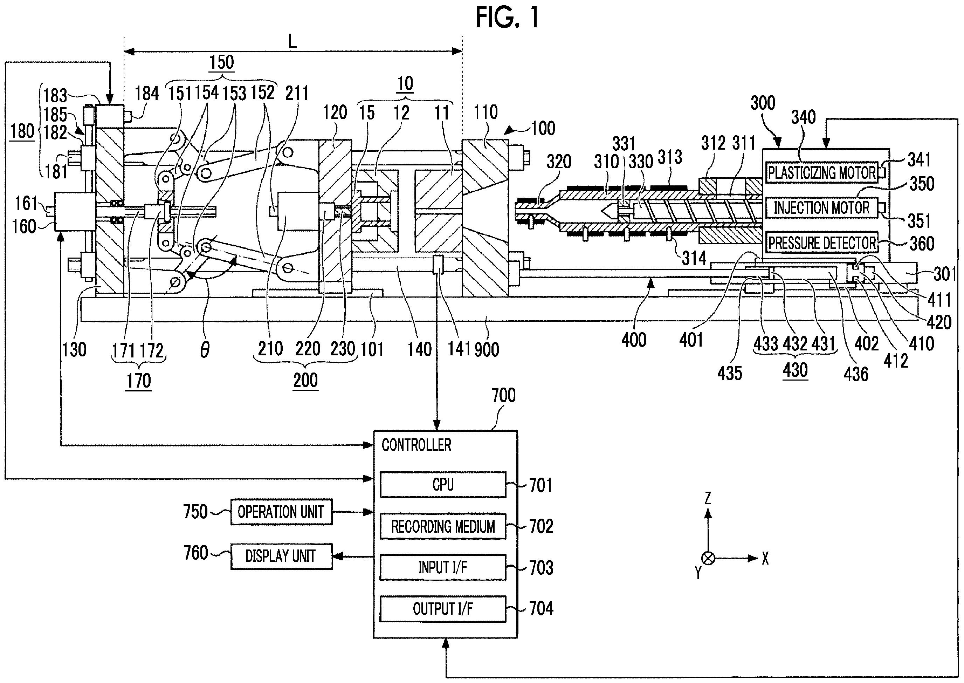

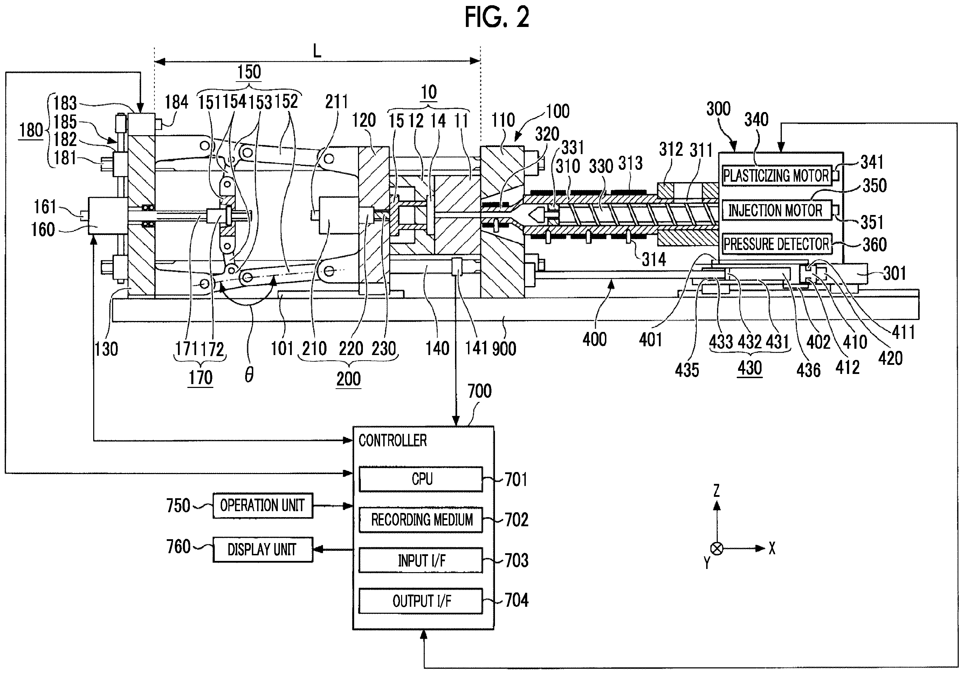

Fig. 1 is a view showing a state when a mold opening of an injection molding machine according to an embodiment is completed. Fig. 2 is a view showing a state when a mold of the injection molding machine according to the embodiment is clamped. In Figs. 1 and 2, an X direction, a Y direction, and a Z direction are directions perpendicular to each other. Each of the X direction and the Y direction indicates a horizontal direction and the Z direction indicates a vertical direction. In a case where a mold clamping unit 100 is a horizontal type mold clamping unit, the X direction is mold opening and closing directions, and the Y direction is a width direction of the injection molding machine.

The injection molding machine include the mold clamping unit 100, an ejector unit 200, an injection unit 300, a movement unit 400, a controller 700, and a frame 900. Hereinafter, each component of the injection molding machine will be described.

### Mold Clamping Unit

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 10. For example, the mold clamping unit 100 is a horizontal type clamping unit and mold opening and closing directions are a horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame 900. A stationary mold 11 is attached to a surface of the stationary platen 110 facing the movable platen 120.

The movable platen 120 is movable in the mold opening and closing directions with respect to the frame 900. A guide 101 which guides the movable platen 120 is placed on the frame 900. A movable mold 12 is attached to a surface of the movable platen 120 facing the stationary platen 110.

The movable platen 120 is moved forward or rearward with respect to the stationary platen 110, and thus, closing, clamping, and opening of the mold are performed. The mold unit 10 is configured of the stationary mold 11 and the movable mold 12.

The toggle support 130 is connected to the stationary platen 110 with a gap therebetween, and is placed on the frame 900 to be movable in mold opening and closing directions . In addition, the toggle support 130 may be movable along a guide which is placed on the frame 900. The guide of the toggle support 130 may be also used as the guide 101 of the movable platen 120.

In addition, in the present embodiment, the stationary platen 110 is fixed to the frame 900, and the toggle support 130 is movable in the mold opening and closing directions with respect to the frame 900. However, the toggle support 130 may be fixed to the frame 900, and the stationary platen 110 may be movable in the mold opening and closing directions with respect to the frame 900.

The stationary platen 110 and the toggle support 130 are connected to each other with a gap L in the mold opening and closing directions by the tie bar 140. A plurality of (for example, four) tie bars 140 may be used. The tie bars 140 are parallel in the mold opening and closing directions and extend according to a mold clamping force. A tie bar strain detector 141 which detects strain of the tie bar 140 is provided in at least one tie bar 140. The tie bar strain detector 141 sends signals indicating the detection results to the controller 700. The detection results of the tie bar strain detector 141 are used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and the attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 is configured of a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or the like and the second link 153 is attached to the toggle support 130 so as to be oscillated by pins or the like. The second link 153 is attached to the crosshead 151 via a third link 154. If the crosshead 151 is moved forward or rearward with respect to the toggle support 130, the first link 152 and the second link 153 are bent and stretched and the movable platen 120 is moved forward or rearward with respect to the toggle support 130.

In addition, the configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 is moved forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the controller 700.

In the mold closing process, the mold clamping motor 160 is driven to move the crosshead 151 forward to a mold closing completion position at a set speed. Accordingly, the movable platen 120 is moved forward and the movable mold 12 comes into contact with the stationary mold 11. For example, a position or speed of the crosshead 151 is detected using a mold clamping motor encoder 161 or the like. The mold clamping motor encoder 161 detects the rotation of the mold clamping motor 160 and sends signals indicating the detection results to the controller 700.

In the mold clamping process, the mold clamping motor 160 is further driven to further move the crosshead 151 forward from the mold closing completion position to a mold clamping position, and thus, a mold clamping force is generated. When the mold is clamped, a cavity space 14 is formed between the movable mold 12 and the stationary mold 11, and the cavity space 14 is filled with a liquid molding material by the injection unit 300. A filled molding material is solidified, and thus, a molding product is obtained. A plurality of cavity spaces 14 may be provided, and in this case, a plurality of molding products maybe simultaneously obtained.

In the mold opening process, the mold clamping motor 160 is driven to move the crosshead 151 rearward to a mold opening completion position at a set speed. Accordingly, the movable platen 120 is moved rearward, and the movable mold 12 is separated from the stationary mold 11. Thereafter, the ejector unit 200 ejects the molding product from the movable mold 12.

Setting conditions in the mold closing process and the mold clamping process are collectively set as a series of setting conditions. For example, a speed or positions (including a speed switching position, a mold closing completion position, and a mold clamping position) of the crosshead 151 in the mold closing process and the mold clamping process are collectively set as a series of setting conditions. In addition, instead of the speed, the positions, or the like of the crosshead 151, a speed, positions, or the like of the movable platen 120 maybe set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 10 is changed by replacement of the mold unit 10, a temperature change of the mold unit 10, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 becomes a predetermined angle at the time of a mold touch where the movable mold 12 comes into contact with the stationary mold 11.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably supported by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated. In addition, it is possible to rotate the plurality of screw nuts 182 individually by changing a transmission path of the rotation transmission portion 185.

For example, the rotation transmission portion 185 is configured of a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotation transmission portion 185 may be configured of a belt, a pulley, or the like instead of the gear.

An operation of the mold space adjustment mechanism 180 is controlled by the controller 700. The controller 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

In addition, in the present embodiment, the screw nut 182 is rotatably held with respect to the toggle support 130 and the tie bar 140 in which the screw shaft 181 is formed is fixed to the stationary platen 110. However, the present invention is not limited to this.

For example, the screw nut 182 may be rotatably held with respect to the stationary platen 110 and the tie bar 140 may be fixed to the toggle support 130. In this case, the gap L can be adjusted by rotating the screw nut 182.

Moreover, the screw nut 182 maybe fixed to the toggle support 130 and the tie bar 140 may be rotatably held with respect to the stationary platen 110. In this case, the gap L can be adjusted by rotating the tie bar 140.

Moreover, the screw nut 182 may be fixed to the stationary platen 110 and the tie bar 140 may be rotatably held with respect to the toggle support 130. In this case, the gap L can be adjusted by rotating the tie bar 140.

The gap L is detected using a mold space adjustment motor encoder 184. The mold space adjustment motor encoder 184 detects a rotation amount or a rotation direction of the mold space adjustment motor 183 and sends signals indicating the detection results to the controller 700. The detection results of the mold space adjustment motor encoder 184 are used to monitor or control the position of the toggle support 130 or the gap L.

The mold space adjustment mechanism 180 rotates one of the screw shaft 181 and the screw nut 182 which are screwed to each other to adjust the gap L. A plurality of mold space adjustment mechanisms 180 maybe used, and a plurality of mold space adjustment motors 183 may be used.

Moreover, in order to adjust the gap L, the mold space adjustment mechanism 180 of the present embodiment includes the screw shaft 181 formed on the tie bar 140 and the screw nut 182 screwed to the screw shaft 181. However, the present invention is not limited to this.

For example, the mold space adjustment mechanism 180 may include a tie bar temperature controller which controls the temperature of the tie bar 140. The tie bar temperature controller is attached to each tie bar 140 and coordinates the temperatures of the plurality of tie bars 140. The tie bar 140 is lengthened by heat expansion and the gap L increases as the temperature of the tie bar 140 increases. The temperatures of the plurality of tie bars 140 can be adjusted independently.

For example, the tie bar temperature controller includes a heating unit such as a heater and controls the temperature of the tie bar 140 by heating. The tie bar temperature controller may include a cooler such as a water cooling jacket and may control the temperature of the tie bar 140 by cooling. The tie bar temperature controller may include both the heating unit and the cooler.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions. The vertical type mold clamping unit includes a lower platen, an upper platen, a toggle support, tie bars, a toggle mechanism, a mold clamping motor, or the like. Any one of the lower platen and the upper platen is used as a stationary platen and the other is used as a movable platen. A lower mold is attached to the lower platen and an upper mold is attached to the upper platen. The lower mold and the upper mold configure the mold unit. The lower mold may be attached to the lower platen via a rotary table. The toggle support is disposed below the lower platen and is connected to the upper platen via the tie bar. The upper platen and the toggle support are connected to each other in mold opening and closing directions by the tie bar with a gap therebetween. The toggle mechanism is disposed between the toggle support and the lower platen and lifts or lowers the movable platen. The mold clamping motor operates the toggle mechanism. In a case where the mold clamping unit is a vertical mold clamping unit, in general, the number of the tie bars is three. In addition, the number of the tie bars is not particularly limited.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### Ejector Unit

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is open is defined as the rear side.

The ejector unit 200 ejects the molding product from the mold unit 10. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can be moved forward or rearward through a through-hole of the movable platen 120. A front end portion of the ejector rod 230 comes into contact with a movable member 15 which is disposed to be movable forward or rearward inside the movable mold 12. The front end portion of the ejector rod 230 may be connected to the movable member 15 or may not be connected to the movable member 15.

The ejector unit 200 performs an ejection process under the control of the controller 700.

In the ejection process, the ejector motor 210 is driven to move the ejector rod 230 forward from a standby position to an ejection position at a set speed, and thus, the movable member 15 is moved forward and the molding product is ejected. Thereafter, the ejector motor 210 is driven to move the ejector rod 230 rearward at a set speed, and thus, the movable member 15 is moved rearward to an original standby position. For example, a position or speed of the ejector rod 230 is detected using an ejector motor encoder 211. The ejector motor encoder 211 detects the rotation of the ejector motor 210 and sends signals indicating the detection results to the controller 700.

### Injection Unit

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame 900, and is movable forward or rearward with respect to the mold unit 10. The injection unit 300 comes into contact with the mold unit 10, and thus, the cavity space 14 inside the mold unit 10 is filled with the molding material. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The controller 700 controls the heating unit 313 such that a detection temperature of the temperature detector 314 for each zone becomes a set temperature.

The nozzle 320 is provided on the front end portion of the cylinder 310 and presses the mold unit 10. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 is moved rearward. Thereafter, if the screw 330 is moved forward, the liquid molding material accumulated in front of the screw 330 is injected from the nozzle 320 and the inside of the mold unit 10 is filled with the liquid molding material.

A backflow prevention ring 331 is attached to a front portion of the screw 330 to be movable forward or rearward as a backflow prevention valve which prevents a backflow of the molding material from the front side of the screw 330 toward the rear side when the screw 330 is pushed forward.

When the screw 330 is moved forward, the backflow prevention ring 331 is pushed toward the rear side by the pressure of the molding material in front of the screw 330 and is moved rearward relative to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and is moved forward relative to the screw 330 to an open position (refer to Fig. 1) at which the flow path of the molding material is open. Accordingly, the molding material is fed to the front side of the screw 330.

The backflow prevention ring 331 maybe either a co-rotation type ring which rotates together with the screw 330 or a non-co-rotation type ring which does not rotate together with the screw 330.

In addition, the injection unit 300 may include a drive source which moves the backflow prevention ring 331 forward or rearward relative to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder or the like, for example.

The pressure detector 360 detects a pressure transmitted between the injection motor 350 and the screw 330. The pressure detector 360 is provided on a pressure transmission path between the injection motor 350 and the screw 330 and detects a pressure applied to the pressure detector 360.

The pressure detector 360 sends signals indicating the detection results to the controller 700. The detection results of the pressure detector 360 are used to control or monitor a pressure received by the screw 330 from the molding material, a back pressure with respect to the screw 330, a pressure applied from the screw 330 to the molding material, or the like.

The injection unit 300 performs a filling process, a holding pressure process, a plasticizing process, or the like under the control of the controller 700.

In the filling process, the injection motor 350 is driven to move the screw 330 forward at a set speed, and the cavity space 14 inside the mold unit 10 is filled with the liquid molding material accumulated in front of the screw 330. For example, a position or speed of the screw 330 is detected using an injection motor encoder 351. The injection motor encoder 351 detects the rotation of the injection motor 350 and sends signals indicating the detection results to the controller 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

Moreover, in the filling process, after the position of the screw 330 reaches the set position, the screw 330 may temporarily stop at the set position, and thereafter, the V/P switching may be performed. Immediately before the V/P switching, instead of stopping the screw 330, the screw 330 may be moved forward or may be moved rearward at a very slow speed.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 10. Insufficient molding materials can be replenished by cooling shrinkage in the mold unit 10. For example, the holding pressure is detected using the pressure detector 360. The pressure detector 360 sends signals indicating the detection results to the controller 700. A set value of the holding pressure may be changed according to an elapsed time from the starting of the holding pressure process, or the like.

In the holding pressure process, the molding material inside the cavity space 14 in the mold unit 10 is gradually cooled, and when the holding pressure process is completed, an inlet of the cavity space 14 is closed by the molding material which is solidified. This state is referred to as a gate seal, and a backflow of the molding material from the cavity space 14 is prevented. After the holding pressure process, a cooling process starts. In the cooling process, solidification of the molding material in the cavity space 14 is performed. In order to shorten a molding cycle time, the plasticizing process may be performed during the cooling process.

In the plasticizing process, the plasticizing motor 340 is driven to rotate the screw 330 at a set rotating speed and the molding material is fed forward along the spiral grooves of the screw 330 by the screw 330. According to this, the molding material is gradually melted. The screw 330 is moved rearward as the liquid molding material is fed to the front side of the screw 330 and is accumulated in front of the cylinder 310. For example, the rotating speed of the screw 330 is detected using a plasticizing motor encoder 341. The plasticizing motor encoder 341 detects the rotation of the plasticizing motor 340 and sends signals indicating the detection results to the controller 700.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends signals indicating the detection results to the controller 700. If the screw 330 is moved rearward to a plasticizing completion position and a predetermined amount of the molding materials is accumulated in front of the screw 330, the plasticizing process is completed.

In addition, the injection unit 300 of the present embodiment is an inline and screw type injection unit. However, the injection unit 300 may be a preplasticizing type injection unit. The preplasticizing type injection unit supplies molten molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### Movement Unit

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during plasticizing is referred to as a rear side.

The movement unit 400 moves the injection unit 300 forward or rearward with respect to the mold unit 10. In addition, the movement unit 400 presses the nozzle 320 to the mold unit 10 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction and by rotation torque corresponding to the control signals from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 is moved forward, and thus, the nozzle 320 is pressed to the stationary mold 11. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 is moved rearward and thus, the nozzle 320 is separated from the stationary mold 11.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### Controller

For example, as shown in Figs. 1 and 2, the controller 700 includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 repeatedly performs the mold closing process, the mold clamping process, the mold opening process, or the like to repeatedly manufacture the molding product. In addition, the controller 700 performs the plasticizing process, the filling process, the holding pressure process, or the like during the mold clamping process. A series of operations to obtain the molding product, for example, an operation from the start of the plasticizing process to the start of the next plasticizing process is referred to as "shot" or a "molding cycle". In addition, a time required for once shot is also referred to as a "molding cycle time".

The controller 700 is connected to an operation unit 750 or the display unit 760. The operation unit 750 receives an input operation from a user and outputs signals corresponding to the input operation to the controller 700. The display unit 760 displays an operation screen corresponding to the input operation of the operation unit 750 under the control of the controller 700.

The operation screen is used for the setting of the injection molding machine or the like. A plurality of operation screens are provided, and thus, are displayed to be switched or to overlap each other. A user operates the operation unit 750 while viewing the operation screen displayed by the display unit 760 to perform the setting (including an input of a set value) of the injection molding machine or the like.

For example, the operation unit 750 and the display unit 760 may be configured of a touch panel to be integrated with each other. In addition, in the present embodiment, the operation unit 750 and the display unit 760 are integrated with each other. However, the operation unit 750 and the display unit 760 may be provided to be independent to each other. In addition, a plurality of operation units 750 may be provided.

### Movement Control Based on Strain of Frame

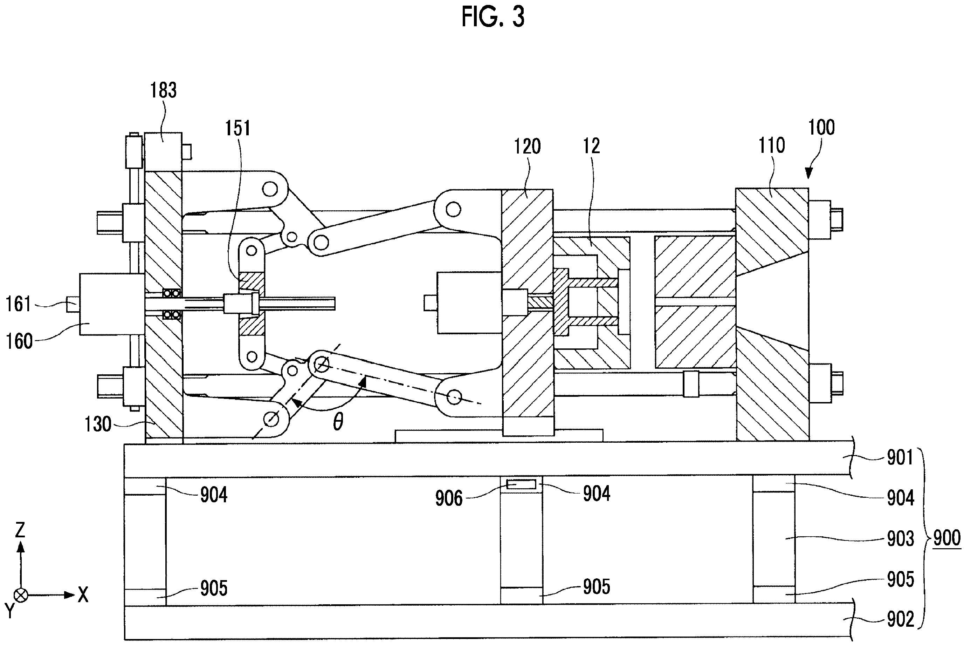

Fig. 3 is a view showing the mold clamping unit and the frame according to the embodiment. For example, the frame 900 includes an upper frame portion 901 on which the mold clamping unit 100 is installed, a lower frame portion 902 to which a level pad installed on a floor surface of a factory or the like is attached, and pillar portions 903 which are provided between the upper frame portion 901 and the lower frame portion 902. The level pad adjusts a height from the floor surface to the lower frame portion 902 and is attached to a plurality of portions of the lower frame portion 902.

The upper frame portion 901 is formed by joining a plurality of beam portions to each other using welding or the like, and is formed in a rectangular frame shape when viewed in a vertical direction, for example. Similarly, the lower frame portion 902 is formed by joining a plurality of beam portions to each other using welding or the like, and is formed in a rectangular frame shape when viewed in the vertical direction, for example. A plurality of pillar portions 903 extend in the vertical direction and are provided between the upper frame portion 901 and the lower frame portion 902.

The frame 900 includes welded portions formed by joining a plurality of components configuring the frame 900 to each other using welding. For example, the frame 900 includes welded portions 904 which join upper end portions of the pillar portions 903 and the upper frame portion 901 to each other, and welded portions 905 which join lower end portions of the pillar portion 903 and the lower frame portion 902 to each other. Also, the frame 900 includes welded portions which join the plurality of beam portions configuring the upper frame portion 901 to each other and welded portions which join the plurality of beam portions configuring the lower frame portion 902 to each other.

The frame 900 supports the movable platen 120. The movable platen 120 is moved forward and backward with respect to the frame 900, and thus, the movable mold 12 is moved forward and backward. When the movable platen 120 and the movable mold 12 are moved, the frame 900 receives a reaction force from the movable platen 120 and is strained.

A frame strain detector 906 which detects the strain of the frame 900 is provided in the frame 900. The frame strain detector 906 is configured of a strain gauge or the like. The frame strain detector 906 sends signals indicating the detection results to the controller 700.

The frame strain detector 906 may detect the strain of the welded portion (welded portion 904 in Fig. 3) of the frame 900. The welded portion is a bent portion of the frame 900, and thus, the reaction force from the movable platen 120 is easily concentrated in the welded portion. In addition, the welded portion is influenced by heat during welding, and thus, the welded portion is more easily damaged than the pillar portion 903 or the beam portion.

Preferably, the frame strain detector 906 detects the strain in the welded portion (for example, welded portions 904 and 905) which joins the components of the frame 900 to each other in a direction (for example, Z direction) orthogonal to the movement direction (X direction in Fig. 3) of the movable platen 120. Shear stress acts on the welded portion by the reaction force from the movable platen 120 when the movable platen 120 and the movable mold 12 are moved.

In a case where the strain of the welded portion is detected, the frame strain detector 906 may be provided so as not to protrude from the welded portion, or may be provided so as to straddle the welded portion. For example, the frame strain detector 906 may be provided so as to be accommodated in the welded portion 904 as shown in Fig. 3, or may be provided in the upper frame portion 901 and the pillar portion 903 across the welded portion 904.

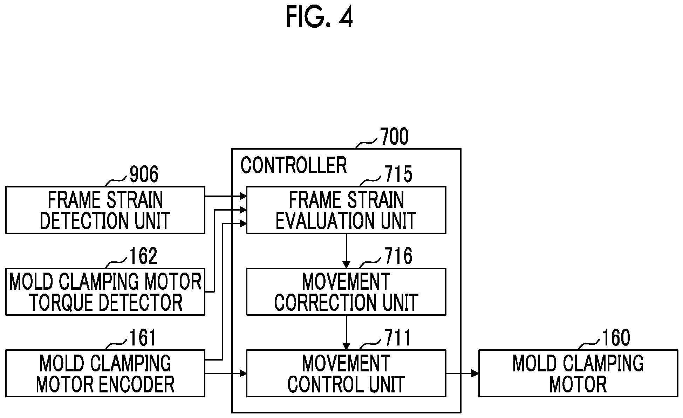

Fig. 4 is a functional block diagram showing components of the controller according to the embodiment. The functional blocks shown in Fig. 4 are conceptual and do not necessarily have to be physically configured as shown. All functional blocks or some functional blocks can be configured so as to be dispersed or integrated functionally or physically in any unit. All processing functions or some processing functions performed in the functional blocks can be realized by a program executed by a CPU or can be realized as hardware by wired logic.

For example, the controller 700 includes a movement control unit 711 which controls the movement of the movable platen 120 with respect to the frame 900 by controlling the movement of the crosshead 151 with respect to the frame 900.

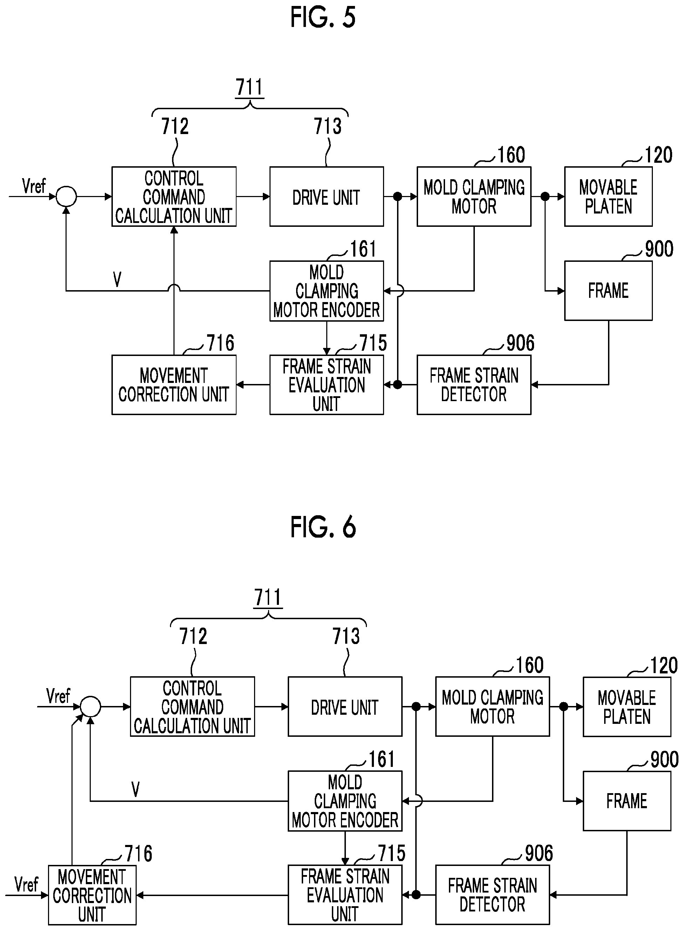

The movement control unit 711 controls the mold clamping motor 160 such that a movement speed of the crosshead 151 becomes a set speed. The movement control unit 711 includes a control command calculation unit 712 (refer to Figs. 5 and 6) whichprepares a control command based on a set speed Vref and an actual speed V, a driver unit 713 (refer to Figs. 5 and 6) which supplies an alternating current to the mold clamping motor 160 according to the control command, or the like.

The control command calculation unit 712 prepares the control command based on the set speed Vref and the actual speed V. For example, the control command calculation unit 712 prepares an output wave of the driver unit 713 so that a deviation between the set speed Vref and the actual speed V becomes zero. For preparing the output wave of the driver unit 713, for example, a PI calculation, a PID calculation, or the like is used. The control command calculation unit 712 compares the output wave of the driver unit 713 and a carrier wave to prepare a PWM (Pulse Width Modulation) signal.

The driver unit 713 is configured of an inverter or the like that converts DC power into AC power. For example, the inverter includes a plurality of legs configured of two switching elements. A diode is connected to each switching element in an anti-parallel manner. The diode may be built in each switching element. The inverter performs switching according to the PWM signal from the control command calculation unit 712 and supplies the AC power to the mold clamping motor 160. In addition, the control method of the driver unit 713 is not limited to the PWM.

As shown in Fig. 4, the controller 700 includes a frame strain evaluation unit 715 which performs at least one of a measurement and an estimation of the strain of the frame 900 caused by the movement of the movable platen 120. By performing at least one of measurement and estimation of the strain of frame 900, it is possible to study causes and countermeasures of the strain of frame 900 and to suppress damages of frame 900.

For example, the frame strain evaluation unit 715 measures the strain of the frame 900 using the frame strain detector 906 provided in the frame 900. By using the frame strain detector 906, the strain of a specific portion of the frame 900 can be accurately detected. In addition, it is possible to measure a distribution of the strain of the frame 900 by using the plurality of frame strain detectors 906. When the strain of one portion is larger than the strain of the other portions, it can be determined that the stress concentrates on the portion where the strain is large.

The strain of the frame 900 is generated by a reaction force RF from movable platen 120 and is proportional to the reaction force RF. Therefore, the strain of the frame 900 can be obtained by multiplying the reaction force RF from the movable platen 120 by a predetermined coefficient C. The coefficient C is obtained in advance by stress analysis using a finite element method or the like.

For example, the reaction force RF from the movable platen 120 can be expressed by a product (A × W) of an acceleration A of the movable platen 120 and a total weight W of the movable platen 120 and the movable mold 12. Therefore, the frame strain evaluation unit 715 may estimate the strain of the frame 900 based on the acceleration A of the movable platen 120. The strain of frame 900 is calculated using the Expression of A × W × C.

Here, for example, the acceleration A of the movable platen 120 is obtained by detecting the position of the crosshead 151 using the mold clamping motor encoder 161 and converting the position of the crosshead 151 to the position of the movable platen 120. The position of the crosshead 151 corresponds to the position of the movable platen 120 on a one-to-one basis. Data indicating this correspondence relationship is stored in the recording medium 702 in advance and is read out as necessary.

In addition, the total weight W of the movable platen 120 and the movable mold 12 stored in the recording medium 702 in advance is read out and used.

The reaction force RF from the movable platen 120 can be expressed by a product of a magnitude T of the torque of the mold clamping motor 160 which moves the movable platen 120, a lead SL of a ball screw which is the motion conversion mechanism 170, and a toggle magnification TM. Therefore, the frame strain evaluation unit 715 may estimate the strain of the frame 900 based on the magnitude of the torque of the mold clamping motor 160 which moves the movable platen 120. The strain of the frame 900 is calculated using the Expression T × SL × TM × C.

Here, for example, the lead SL of the ball screw means a movement distance in which a screw nut 172 moves in the axial direction when a screw shaft 171 is rotated once in a case where the screw shaft 171 is rotated and the screw nut 172 is moved in the axial direction. The screw nut 172 may be rotated to move the screw shaft 171 in the axial direction, or the screw shaft 171 may be moved in the axial direction while being rotated in a state where the screw nut 172 is fixed. The lead SL of the ball screw stored in the recording medium 702 in advance is read out and used.

In addition, for example, the toggle magnification TM is obtained by detecting the position of the crosshead 151 using the mold clamping motor encoder 161 and converting the position of the crosshead 151 to the toggle magnification TM. As the position of the crosshead 151 is moved forward, a link angle θ approaches 180°, and the toggle magnification TM increases. A correspondence relationship between the position of the crosshead 151, the link angle θ, and the toggle magnification TM stored in the recording medium 702 in advance is read out and used.

Moreover, the magnitude T of the torque of the mold clamping motor 160 maybe detected by the mold clamping motor torque detector 162. For example, the mold clamping motor torque detector 162 detects a supply current value of the mold clamping motor 160 so as to detect the torque of the mold clamping motor 160. In addition, the magnitude T of the torque of the mold clamping motor 160 may be obtained from a control command value to the driver unit 713.

As shown in Fig. 4, the controller 700 may include a movement correction unit 716 which corrects the movement of the movable platen 120 by the movement control unit 711, based on the strain of the frame 900 obtained by the frame strain evaluation unit 715. The movement correction unit 716 corrects the movement of the movable platen 120 by the movement control unit 711 such that the strain of the frame 900 obtained by the frame strain evaluation unit 715 is equal to or less than a reference value or less. A relationship between the magnitude of the strain of the frame 900 and a deterioration speed of the frame 900 is obtained in advance by a test, and the reference value of the strain of the frame 900 is set based on the test result. The movement control unit 711 corrects the movement of the movable platen 120 according to the correction of the movement correction unit 716. As a result, the strain of the frame 900 can be suppressed, and damages of the frame 900 can be suppressed.

Fig. 5 is a diagram showing the controller which restricts the magnitude of the torque by the movement correction unit according to the embodiment. The movement correction unit 716 shown in Fig. 5 restricts the magnitude of the torque of the mold clamping motor 160 such that the strain of the frame 900 obtained by the frame strain evaluation unit 715 is equal to or less than the reference value. For example, the movement correction unit 716 corrects the control command of the control command calculation unit 712 to restrict the supply current of the mold clamping motor 160 and restrict the magnitude of the torque of the mold clamping motor 160. Accordingly, the strain of the frame 900 can be suppressed, and damages of the frame 900 can be suppressed.

Fig. 6 is a diagram showing the controller which corrects a speed pattern by the movement correction unit according to the embodiment. The movement correction unit 716 shown in Fig. 6 corrects the movement speed pattern of the crosshead 151 such that the strain of the frame 900 obtained by the frame strain evaluation unit 715 is equal to or less than the reference value. For example, the movement correction unit 716 calculates a correction amount of a set speed Vref based on the strain of the frame 900 and the set speed Vref to correct a deviation between the set speed Vref and an actual speed V, and thus, correct a movement speed pattern of the crosshead 151. As a result, the strain of the frame 900 can be suppressed, and damages of the frame 900 can be suppressed.

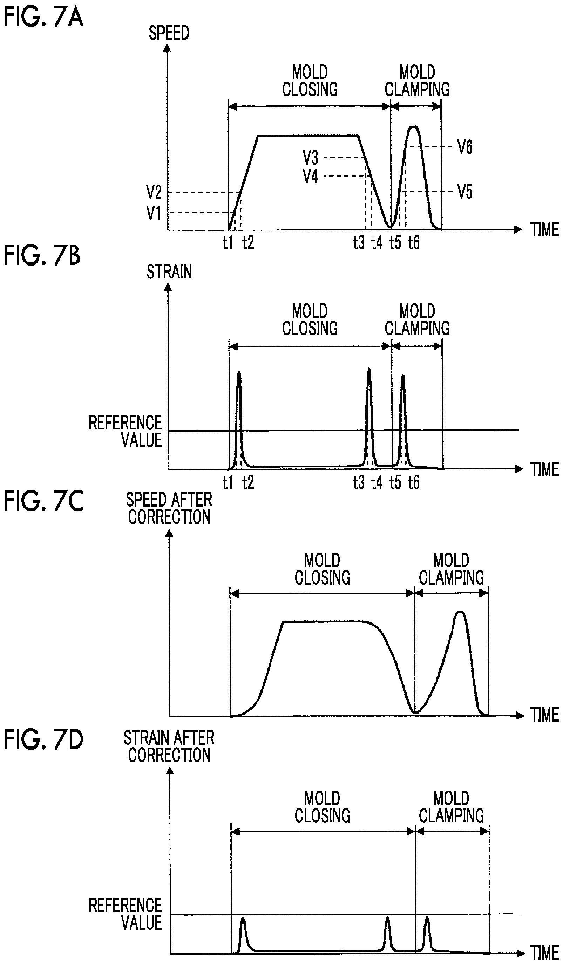

Figs. 7A to 7D are graphs showing the speed pattern of the crosshead before the correction, the strain of the frame before the correction, the speed pattern of the crosshead after the correction, and the strain of the frame after the correction in the mold closing process and the mold clamping process according to the embodiment. Fig. 7A is the graph showing the speed pattern of the crosshead before the correction in the mold closing process and the mold clamping process according to the embodiment. Figs . 7B is the graph showing the strain of the frame before the correction in the mold closing process and the mold clamping process according to the embodiment. Fig. 7C is a graph showing the speed pattern of the crosshead after the correction in the mold closing process and the mold clamping process according to the embodiment. Fig. 7D is a graph showing the strain of the frame after the correction in the mold closing process and the mold clamping process according to the embodiment.

The movement control unit 711 controls the mold clamping motor 160 such that the movement speed of the crosshead 151 is a set speed. In the mold closing process, the movement speed of the crosshead 151 is accelerated from zero to the set speed set by the user, maintained at the set speed, and thereafter, decelerated from the set speed to be substantially zero. Subsequently, in the mold clamping process, the movement speed of the crosshead 151 is accelerated and, thereafter, decelerated. The acceleration and the deceleration of the crosshead 151 stored in the recording medium 702 in advance are read out and used. The acceleration and deceleration of the crosshead 151 may be set at a manufacturer of the injection molding machine.

The frame strain evaluation unit 715 obtains a temporal change of the strain of the frame 900 in the mold closing process and the mold clamping process to check whether or not the strain of the frame 900 exceeds the reference value. In addition, in a case where the strain of the frame 900 exceeds the reference value, the frame strain evaluation unit 715 obtains a period during which the strain of the frame 900 exceeds the reference value.

For example, the period during which the strain of the frame 900 exceeds the reference value in Figs. 7A to 7D is periods of (1) to (3) below. In the period of (1) (a period from a time t1 to a time t2), the movement speed of the crosshead 151 is accelerated from V1 to V2. In the period of (2) (a period from a time t3 to a time t4), the movement speed of the crosshead 151 is decelerated from V3 to V4. In the period of (3) (a period from a time t5 to t6), the movement speed of the crosshead 151 is accelerated from V5 to V6.

The movement correction unit 716 corrects the movement speed pattern of the crosshead 151 such that the strain of the frame 900 is equal to or less than the reference value. Specifically, in the periods (for example, the periods of (1) to (3)) during which the strain of the frame 900 exceeds the reference value, the movement correction unit 716 decreases the magnitude of the acceleration or the magnitude of the deceleration to suppress the reaction force from the movable platen 120.

In addition, the movement correction unit 716 may decrease the magnitude of the acceleration and the magnitude of the deceleration not only in the period during which the strain of the frame 900 exceeds the reference value but also in a period adjacent to the period during which the strain of the frame 900 exceeds the reference value.

The movement control unit 711 controls the movement of the movable platen 120 according to the speed pattern (for example, the speed pattern shown in Figs. 7A to 7D) corrected by the movement correction unit 716 in the next and succeeding shots . As a result, as shown in Fig. 7D, the strain of the frame 900 can be suppressed to be equal to or less than the reference value, and damages of the frame 900 can be suppressed.

Moreover, obtaining the temporal change of the strain of the frame 900 by the frame strain evaluation unit 715 and correcting the movement speed pattern of the crosshead 151 by the movement correction unit 716 may be repeated until the strain of the frame 900 is equal to or less than the reference value.

In Figs. 7A to 7D, the correction of the movement speed pattern of the crosshead 151 in the mold closing process and the mold clamping process is described. However, the movement speed pattern of the crosshead 151 in the mold opening process can be similarly corrected.

The movable platen 120 corresponds to a movable member described in claims and the mold clamping motor 160 corresponds to a motor described in claims. In addition, the movable member is not limited to the movable platen 120. For example, the movable member may be the toggle support 130, and a motor in this case is the mold space adjustment motor 183. In addition, the movable member may be the injection unit 300, and a motor in this case is the motor 420 of the movement unit 400.

### Modification and Improvement

Hereinafter, the embodiment or the like of the injection molding machine is described. However, the present invention is not limited to the above-described embodiment and various modifications and improvements can be applied to the present invention within a scope of the gist of the present invention described in claims.

The controller 700 may further include a mode selection unit which selects whether or not to correct the movement of the movable member based on the strain of the frame 900, based on the operation signal from the operation unit 750 which sends an operation signal corresponding to the input operation by the user to the controller 700. Accordingly, it is possible to increase a convenience of the user.

The controller 700 may have a deterioration degree detection unit which detects a deterioration degree of the frame 900, based on the strain of the frame 900 obtained by the frame strain evaluation unit 715. As the frame 900 deteriorates, the strain of frame 900 increases due to the movement of movable member. Therefore, the degree of deterioration of the frame 900 can be estimated from the magnitude of the strain of the frame 900.

The controller 700 may have a mechanical service-life estimation unit which estimates a mechanical service-life of the frame 900, based on the strain of the frame 900 obtained by the frame strain evaluation unit 715. The machine life estimation section estimates the mechanical service-life based on the deterioration degree detected by the deterioration degree detection unit. An estimation is made that the lifetime of the frame 900 decrease as the deterioration degree detected by the deterioration degree detection unit increases, that is, as the frame 900 deteriorates.

The controller 700 may include an alarm output unit which outputs an alarm based on the strain of the frame 900 obtained by the frame strain evaluation unit 715. For example, the alarm output unit outputs an alarm in a case where the strain of the frame 900 obtained by the frame strain evaluation unit 715 is out of the allowable range. The alarm output unit may output an alarm based on the deterioration degree obtained by the deterioration degree detection unit or the mechanical service-life obtained by the mechanical service-lift estimation unit. The user's attention can be aroused by outputting an alarm, and the user can be urged to repair the frame 900. A plurality of types of alarms may be prepared. The output of the alarm is performed in the form of an image, sound, or the like, and the display unit 760, a warning lamp, a buzzer, or like is used as the output device.

### Brief Description of the Reference Symbols

- 100:: mold clamping unit
- 110:: stationary platen
- 120:: movable platen
- 160:: mold clamping motor
- 161:: mold clamping motor encoder
- 162:: mold clamping motor torque detector
- 700:: controller
- 711:: movement control unit
- 712:: control command calculation unit
- 713:: driver unit
- 715:: frame strain evaluation unit
- 716:: movement correction unit
- 900:: frame
- 901:: upper frame portion
- 902:: lower frame portion
- 903:: pillar portion
- 904:: welded portion
- 905:: welded portion
- 906:: frame strain detector

## Claims

1. An injection molding machine, comprising:
a frame (900) ;
a movable member (15) which is supported by the frame (900) ;
a movement control unit (711) which controls a movement of the movable member (15) with respect to the frame (900) ; and
a frame strain evaluation unit (715) which performs at least one of a measurement and an estimation of strain of the frame caused by the movement of the movable member (15).

2. The injection molding machine according to claim 1, further comprising:
a movement correction unit (716) which corrects the movement of the movable member (15) by the movement control unit (711) based on the strain obtained by the frame strain evaluation unit (715) .

3. The injection molding machine according to claim 2,
wherein the movement correction unit (716) corrects the movement of the movable member (15) by the movement control unit (711) such that the strain obtained by the frame strain evaluation unit (715) is equal to or less than a reference value.

4. The injection molding machine according to any one of claims 1 to 3,
wherein the frame strain evaluation unit (715) measures the strain of the frame using a strain detector (906) provided in the frame.

5. The injection molding machine according to any one of claims 1 to 4,
wherein the frame strain evaluation unit (715) estimates the strain of the frame based on an acceleration of the movable member (15).

6. The injection molding machine according to any one of claims 1 to 5,
wherein the frame strain evaluation unit (715) estimates the strain of the frame based on torque of a motor which moves the movable member (15).

## Patentansprüche

1. Spritzgießmaschine, umfassend:
einen Rahmen (900);
ein bewegliches Element (15), das durch den Rahmen (900) getragen wird;
eine Bewegungssteuereinheit (711), die eine Bewegung des beweglichen Elements (15) in Bezug auf den Rahmen (900) steuert; und
eine Rahmenbelastungs-Evaluierungseinheit (715), die eine Messung und/oder eine Abschätzung der durch die Bewegung des beweglichen Elements (15) verursachten Belastung des Rahmens ausführt.

2. Spritzgießmaschine nach Anspruch 1, ferner umfassend:
eine Bewegungskorrektureinheit (716), die die Bewegung des beweglichen Elements (15) auf der Grundlage der durch die Rahmenbelastungs-Evaluierungseinheit (715) erhaltenen Belastung durch die Bewegungssteuereinheit (711) korrigiert.

3. Spritzgießmaschine nach Anspruch 2,
wobei die Bewegungskorrektureinheit (716) die Bewegung des beweglichen Elements (15) durch die Bewegungssteuereinheit (711) korrigiert, so dass die durch die Rahmenbelastungs-Evaluierungseinheit (715) erhaltene Belastung gleich oder kleiner als ein Referenzwert ist.

4. Spritzgießmaschine nach einem der Ansprüche 1 bis 3,
wobei die Rahmenbelastungs-Evaluierungseinheit (715) die Belastung des Rahmens unter Verwendung eines in dem Rahmen vorgesehenen Belastungsdetektors (906) misst.

5. Spritzgießmaschine nach einem der Ansprüche 1 bis 4,
wobei die Rahmenbelastungs-Evaluierungseinheit (715) die Belastung des Rahmens auf der Grundlage einer Beschleunigung des beweglichen Elements (15) abschätzt.

6. Spritzgießmaschine nach einem der Ansprüche 1 bis 5,
wobei die Rahmenbelastungs-Evaluierungseinheit (715) die Belastung des Rahmens auf der Grundlage eines Drehmoments eines Motors, der das bewegliche Element (15) bewegt, abschätzt.

## Revendications

1. Une machine de moulage par injection, comprenant :
un châssis (900) ;
un élément mobile (15) qui est pris en charge par le châssis (900) ;
une unité de commande de mouvement (711) qui commande un mouvement de l'élément mobile (15) par rapport au châssis (900) ; et
une unité d'évaluation de contrainte de châssis (715) qui met en oeuvre au moins l'une parmi une mesure et une estimation de contrainte du châssis occasionnée par le mouvement de l'élément mobile (15).

2. La machine de moulage par injection selon la revendication 1, comprenant en outre :
une unité de correction de mouvement (716) qui corrige le mouvement de l'élément mobile (15), commandé par l'unité de commande de mouvement (711), sur la base de la contrainte obtenue par l'unité d'évaluation de contrainte de châssis (715).

3. La machine de moulage par injection selon la revendication 2,
dans laquelle l'unité de correction de mouvement (716) corrige le mouvement de l'élément mobile (15) par l'unité de commande de mouvement (711), de sorte que la contrainte obtenue par l'unité d'évaluation de contrainte de châssis (715) est égale ou inférieure à une valeur de référence.

4. La machine de moulage par injection selon l'une quelconque des revendications 1 à 3,
dans laquelle l'unité d'évaluation de contrainte de châssis (715) mesure la contrainte du châssis en utilisant un détecteur de contrainte (906) fourni dans le châssis.

5. La machine de moulage par injection selon l'une quelconque des revendications 1 à 4,
dans laquelle l'unité d'évaluation de contrainte de châssis (715) estime la contrainte du châssis sur la base d'une accélération de l'élément mobile (15).

6. La machine de moulage par injection selon l'une quelconque des revendications 1 à 5,
dans laquelle l'unité d'évaluation de contrainte de châssis (715) estime la contrainte du châssis sur la base du couple d'un moteur qui déplace l'élément mobile (15).
